# EUROPEAN PATENT SPECIFICATION

(11) **EP 1 147 160 B1**
(45) Date of publication and mention of the grant of the patent: **25.02.2004**
(21) Application number: 99962382.0
(22) Date of filing: 20.12.1999
(51) Int. Cl.: C09K 5/04, C09K 3/30

(54) **VAPORISABLE COMPOSITION**
VERDAMPFBARE ZUSAMMENSETZUNG
COMPOSITION POUVANT SE VAPORISER

(30) Priority: 29.12.1998 GB 9828737
(43) Date of publication of application: 24.10.2001
(73) Proprietor: Star Refrigeration Ltd., Glasgow G46 8JW, Scotland (GB)
(72) Inventor: PEARSON, Stephen Forbes, Bearsden, Glasgow G61 1PZ (GB)
(74) Representative: Horner, Martin Grenville
(86) International application number: PCT/GB1999/004332
(87) International publication number: WO 2000/039242

(56) References cited:
- WO-A-94/20588
- WO-A-97/15637
- GB-A- 2 298 866
- DATABASE WPI Section Ch, Week 199252 Derwent Publications Ltd., London, GB; Class E16, AN 1992-427930 XP002132864 & JP 04 323294 A (DAIKIN KOGYO KK), 12 November 1992 (1992-11-12) -& PATENT ABSTRACTS OF JAPAN vol. 17, no. 162 (C-1042), 30 March 1993 (1993-03-30) & JP 04 323294 A (DAIKIN)

## Description

### FIELD OF THE INVENTION

The present invention relates to a vaporisable composition for use inter alia as a refrigerant, a heat transfer material or an aerosol propellant and which has improved environmental properties.

### BACKGROUND

In particular, the composition may be used as a replacement for the conventional widely used refrigerant R22 (CHClF₂-chlorodifluoromethane) since its refrigerant properties are generally speaking equivalent to those of R22 but the environmental properties of the vaporisable composition particularly in terms of global warming potential (GWP₁₀₀) and ozone depletion potential (ODP) are greatly improved.

There has been much work recently on the blending of fluorocarbons to produce replacements for the refrigerants R502 (which is an azeotrope of R22 and R115) and the single component refrigerant R22. R22 is a chlorine-containing molecule with a significant atmospheric residence time and therefore has a significant ozone depletion potential. For this reason, the use of R22 is likely to be proscribed in the future. Compounds with significant global warming potentials are those which absorb strongly in the infrared region.

The refrigerant blends produced so far have a number of disadvantages. Firstly, they generally have low critical temperatures which reduces the thermodynamic efficiency of refrigeration systems using them. Secondly, they often have very high global warming potentials relative to R22. Thirdly, they generally operate at pressures higher than those associated with R22. Finally, some of them, not being azeotropes, have significant temperature glide which makes them unsuitable for use in refrigeration systems employing flooded evaporators (where refrigerant is present in the liquid state). Temperature glide refers to the change in evaporation temperature which occurs due to the fractionation of a mixed refrigerant during evaporation.

The literature indicates that there are very few zero ODP non-toxic compounds with pressure-temperature relationships similar to that of R22, having at the same time appropriate thermodynamic properties and relatively high critical temperature.

There is therefore a need for a refrigerant, preferably an azeotrope or near-azeotropic blend, which does not contain chlorine or bromine (which would tend to have a high ODP), which has a short atmospheric life and thermodynamic properties tending to give refrigeration system efficiencies similar to those obtainable using R22.

Patent publication W094/20588 discloses two-component blends of R161 and R13I1 but does not suggest their use as R22 replacements; nor does it disclose three-component blends further including R218.

### SUMMARY OF THE INVENTION

The present invention provides a vaporisable composition for use as a replacement for refrigerant R22 or R502, which comprises the following three components;
- 40-90% by weight fluoroethane (R161);
- 10-60% by weight trifluoroiodomethane (R13I1); and
- a minor amount of octafluoropropane (R218).

R161 is found to be a substance having essentially zero ODP and other suitable properties but it has a higher boiling temperature than R22 and is flammable. The boiling point of R161 is -37.48°C and the critical temperature is 102.2°C.

R13I1 is known to have a short atmospheric lifetime and to be a very effective fire extinguishing compound. However, the boiling point of R13I1 is -22.52°C which is much higher than that of R22. The critical temperature is 122°C.

In comparison, the critical temperature of R22 is 95°C and R502 is 90°C.

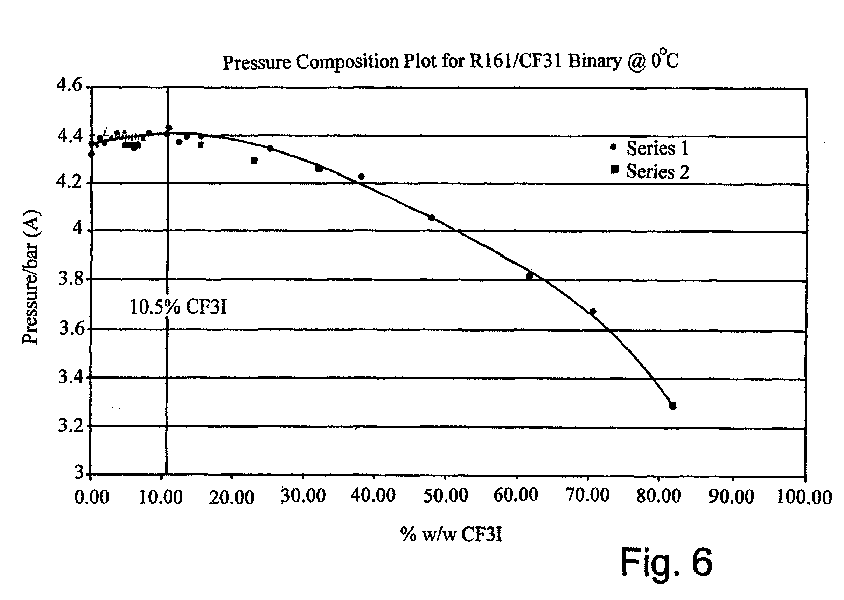

The difference in boiling point between R161 and R13I1 is about 15°C. It is known that compounds having close boiling points, tend to be more likely to produce azeotropes than compounds with greatly different boiling points. In the present instance, the difference in boiling points between R161 and R13I1 would be considered by a skilled man to make the formation of an azeotrope very unlikely. However, it has now been found that when mixing R161 and R13I1, despite the wide difference in boiling point, the pressure-temperature relationship of the composition produced is greater than that of either component. This indicates that, unexpectedly, an azeotrope is formed between these two substances. Attempts to fractionate an 80:20% by weight R161:R13I1 mixture failed - confirming that the azeotropic mixture must be close to these proportions. More recently we have shown that an azeotrope appears to lie in the region 85:15 to 90:10 (Figure 6). Moreover, the composition appear to form a more or less constant boiling mixture over a wide range of proportions. In other words, the boiling point of the composition varies only to a small degree over a wide composition range. This is equivalent to having a low temperature glide.

The preferred near-azeotropic composition of about 80% R161 and 20% R13I1 by weight has a boiling point at atmospheric pressure of about -40°C and a pressure/temperature relationship very similar to that of R22. The vapour pressure of the composition is higher than that of either of the components separately. Generally speaking, the vapour pressure of the composition lies within the range 3.5 to 6.0 bar, especially 4.25 to 5.25 bar and particularly 4.55 to 4.95 bar at 0°C.

Preferably, the proportions of R161 in the composition is in the range 75-85% by weight, especially 78-82% by weight. Advantageously, the proportions of R13I1 are in the range 15-25% by weight, especially 18-22% by weight.

More recent work has shown that up to 95% by weight (e.g. 80 to 95%, especially 80 to 90%) of R161 may be included in the composition. It has also been shown that amounts of R13I1 as low as 5% by weight (e.g. 10 to 20%) may be useful.

A particularly useful property of the vaporisable compositions of the present invention is that they are miscible with mineral oil in essentially all proportions. Since mineral oil is the lubricant conventionally used in refrigeration systems, this means that there is no need to flush out and replace the existing mineral oil lubricant when the refrigerant is changed and replaced by a refrigerant according to the present invention. Some refrigerant compositions are not soluble with conventional mineral oil lubricants and thus require specialised expensive synthetic lubricating oils.

Experimental work has shown that the efficiency of a refrigerating system using the composition of the present invention may be slightly better than that achieved when using conventional R22. This is probably due both to the higher critical temperature of the present composition and also to the low molecular weight (MW = 48) of R161. The literature indicates that both R161 and R13I1 have very short atmospheric lives and therefore should not contribute either to ozone depletion or to global warming.

As mentioned above, the vaporisable composition of the present invention may comprise one or more further components. In particular, a composition having a pressure-temperature relationship very similar to that of conventional refrigerant R502 may be produced by the inclusion of a minor amount of R218 octafluoropropane (CF₃CF₂CF₃-R218) in the composition. The R218 may be present in amounts of 0-25%, particularly 2-20% and especially 5-15% by weight. However, large proportions of R218 are to be avoided because of its high global warming potential. Tests of a blend containing 18% by weight R218 indicated refrigerating effects greater than those of R22. The efficiency was about 12% higher than would have been obtained using R22. Furthermore, the low index of compression of R218 may lead to improved chemical stability of the composition in practical use.

Generally, the vapour pressure at 0°C of a three component R161/R13I1/R218 composition lies in the range 4.9 to 5.6 bar at 0°C.

The invention also extends to a process for producing refrigeration or heating which involves using the vaporisable composition of the present invention in a vapour compression refrigeration system or heat pump.

### PREFERRED EMBODIMENTS

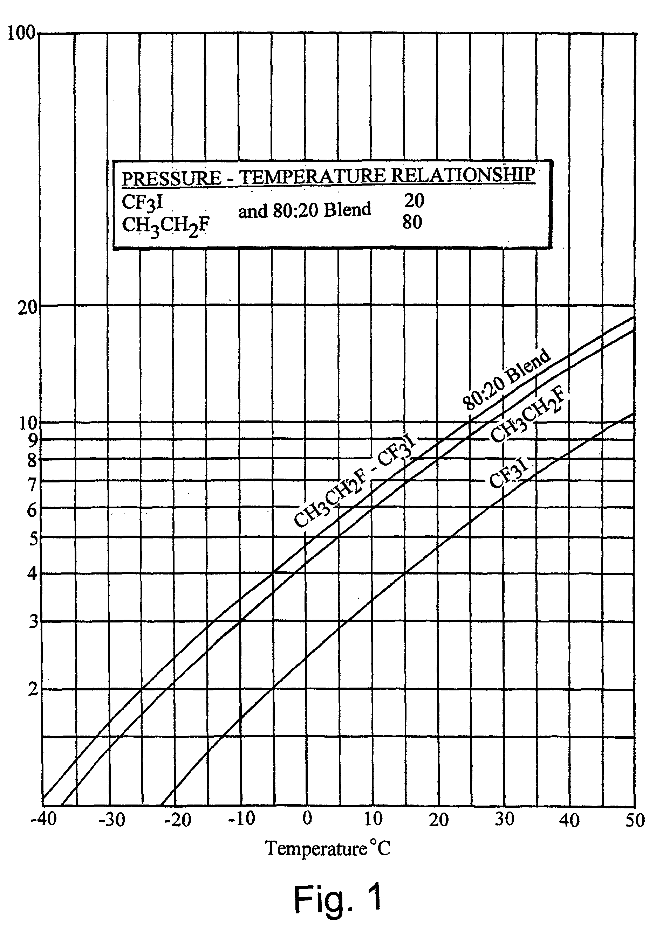

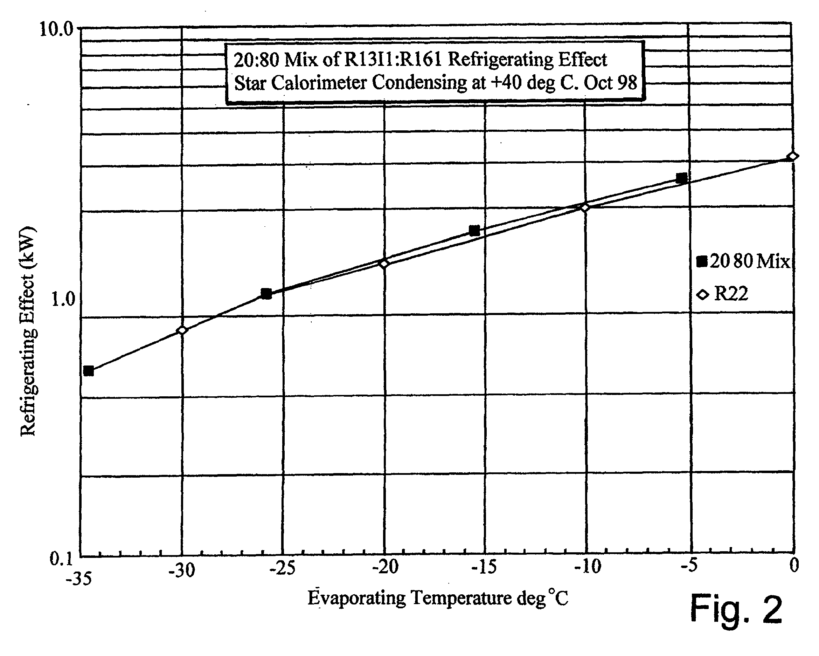

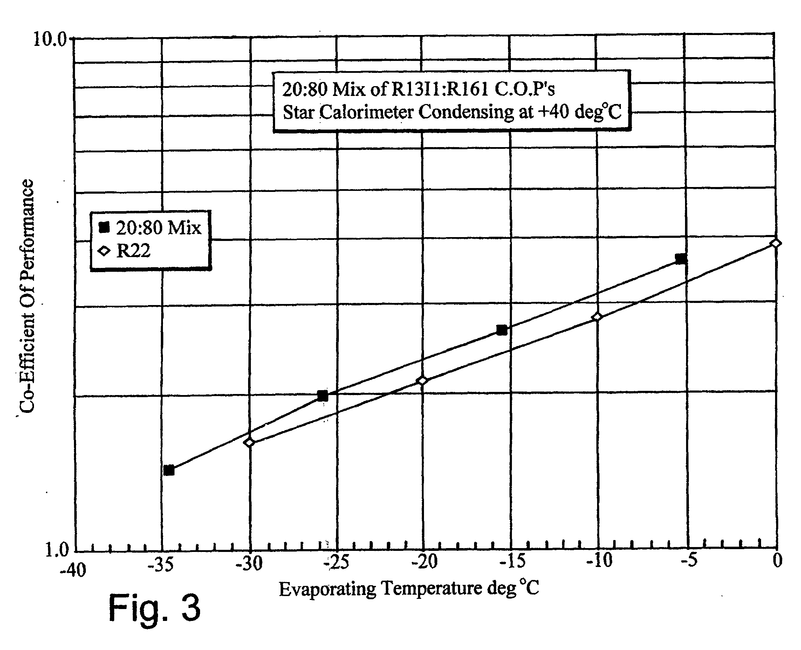

Embodiments of the present invention will now be described by way of example only with reference to the attached Figures 1 to 6.

### EXAMPLE 1 (Two-Component Composition)

A composition comprising 80% R161 and 20% by weight R13I1 was transferred to a specially prepared cylinder having an accurate resistance thermometer fitted within an internal pocket and having a calibrated pressure transducer connected to the cylinder. The cylinder was immersed in a low temperature mixture of solid carbon dioxide and acetone and allowed to warm up slowly. The pressure-temperature relationship obtained is shown in Figure 1, which also shows for comparison the individual pressure-temperature relationships of R161 and R13I1 alone. The pressure-temperature relationship of the 80:20 blend is very similar to that of R22 (not shown).

### EXAMPLE 2 (Two-Component Composition)

The refrigeration effect was measured using a calorimeter and methodology as described in "Automatic Calorimeter for Mixed Refrigerants" S.F. Pearson, 19th International Congress of Refrigeration 1995; Proceedings volume IVa. The measured data is used to determine coefficients of performance (COP). Briefly, the refrigerating effect was determined by measuring the electrical input to a secondary refrigerant calorimeter. The refrigerant under test is compressed using a compressor in a vapour compression system. The refrigerant is condensed in a water cooled condenser at a selected condenser temperature (e.g. 40°C or 55°C). From the condenser the liquid refrigerant is passed through an expansion valve and the evaporating temperature downstream thereof is noted. The evaporating temperature may be varied by varying the amount of refrigerant charged into the system. The associated refrigerating effect produced is measured in the secondary refrigerant calorimeter, wherein the required electrical input to counter-balance the refrigerating effect produced is measured (kW).

The automatic calorimeter was charged with the 80:20 R161/R13I1 composition and was operated at evaporating temperatures in the range -35°C to -5°C with the refrigerant condensing at +40°C. The same calorimeter with the same compressor and lubricant was also operated on R22 under similar conditions for comparison.

Figure 2 shows the refrigerating effect (kW) of the R161/R13I1 composition of the present invention and R22 for comparison. It can be seen that the refrigerating effects of the two refrigerants are very similar.

Figure 3 shows the co-efficient of performance (COP) of the two refrigerants. COP is defined as the ratio of refrigerating effect (kW) to power required to drive the compressor (kW) and is therefore a dimensionless ratio. It can be seen that the COP of the system using the 2-component composition is significantly higher than that obtained using conventional R22.

### EXAMPLE 3 (Three-Component Composition)

It is possible that in the long term the temperatures in a refrigerating system may partially decompose the R13I1 component, which is less stable than conventional halo carbon refrigerants. To address this, a small proportion of R218 was added which is very stable and has a very low index of compression. A measured quantity of R218 was added to the two-component 80:20 composition in the calorimeter. Unexpectedly, the pressure-temperature relationship of the three-component blend produced increased significantly above that of the two-component blend, indicating that a three-component azeotrope had been formed. The three-component blend in the proportions R218/R161/R13I1 of 18.2 to 65.4 to 16.4 was also tested in the automatic calorimeter in the manner described above.

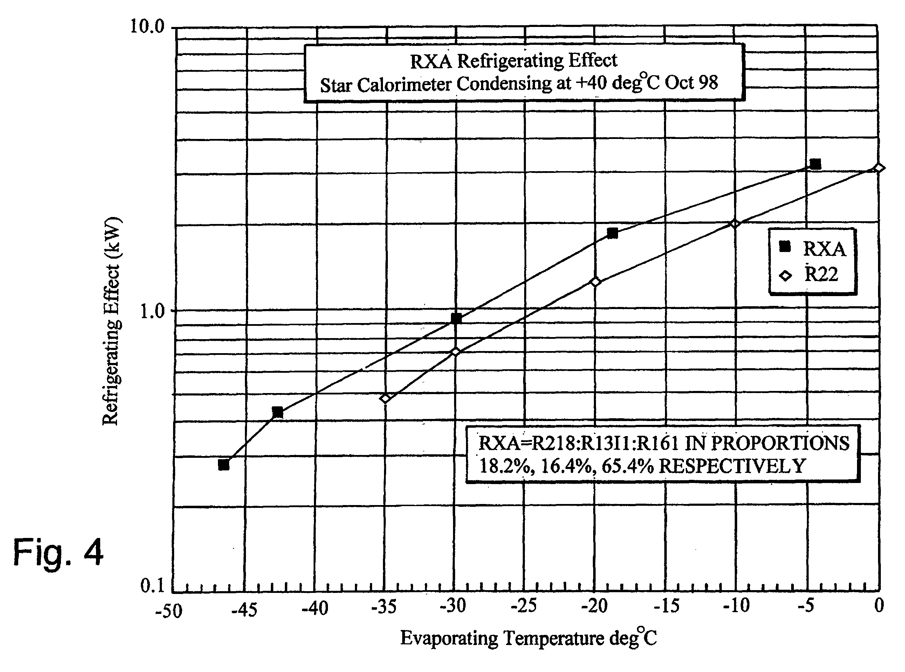

Figure 4 shows the refrigerating effect (kW) of the three-component composition in comparison to conventional R22. It can be seen that the refrigerating effect of the composition of the present invention is significantly greater.

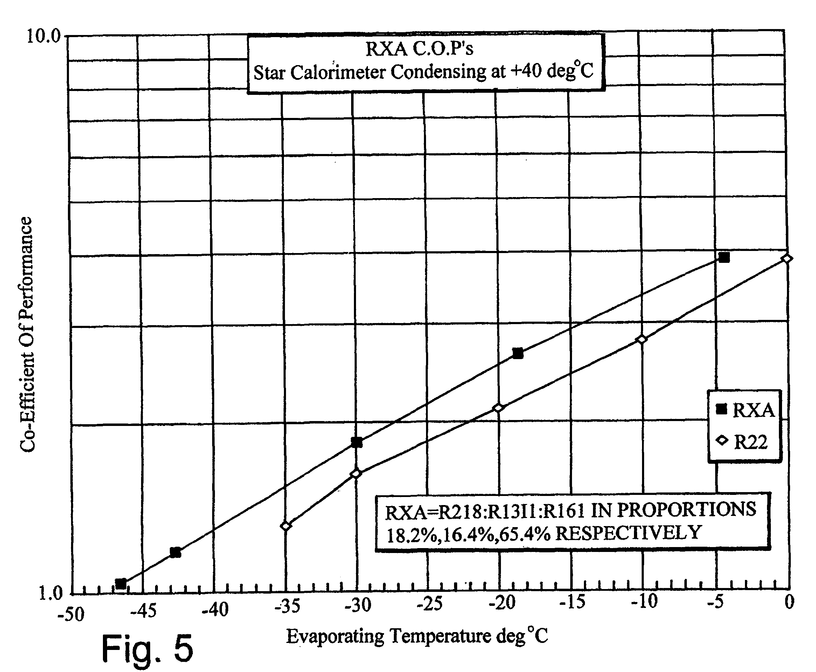

Figure 5 shows the COP of the three-component composition and this is also significantly better than that of conventional R22. The effect of adding the R218 as a third component is to increase the GWP100 to about 1,300, which is similar to that of pure R134a (CH₂FCF₃ - tetrafluoroethane). The GWP₁₀₀ of the two-component 80:20 blend is believed to be less than 10, which is similar to natural refrigerants (such as ammonia, carbon dioxide etc.).

### EXAMPLE 4 (Two-Component Composition)

The vapour pressures of binary R161 and R13I1 compositions of varying proportions were measured at 0°C using an experimental procedure analogous to that described in Example 1. Measurements were carried out on two series of compositions.

Figure 6 shows that the vapour pressure goes through a maximum in the region 10 to 15wt % R13I1 indicating an azeotrope in that region.

## Claims

1. A vaporisable composition for use as a replacement for refrigerant R22 or R502, which comprises the following three components;
- 40 to 90% by weight fluoroethane (R161);
- 10 to 60% by weight trifluoroiodomethane (R13I1); and
- a minor amount of octafluoropropane (R218).

2. A composition according to claim 1, which comprises 75 to 85% by weight fluoroethane.

3. A composition according to claim 2, which comprises 78 to 82% by weight fluoroethane.

4. A composition according to any preceding claim, which comprises 15 to 25% by weight trifluoroiodomethane.

5. A composition according to any preceding claim, which comprises 18 to 22% by weight trifluoroiodomethane.

6. A composition according to any preceding claim which comprises up to 25% by weight octafluoropropane (R218).

7. A composition according to claim 6 which comprises 2 to 20% by weight octafluoropropane.

8. A composition according to claim 7 which comprises 5 to 15% by weight octafluoropropane.

9. A composition according to any of claims 6 to 8 which is a three-component composition consisting of fluoroethane, trifluoroiodomethane and octafluoropropane.

10. Use of a composition according to any of claims 1 to 9 as a replacement refrigerant to replace R22 in a refrigeration system.

11. Use of a composition according to any of claims 6 to 8 as a replacement refrigerant to replace R502 in a refrigeration system.

## Patentansprüche

1. Verdampfbare Zusammensetzung zur Verwendung als Austausch für Kühlmittel R22 oder R502, welche Zusammensetzung die folgenden 3 Komponenten aufweist:
- 40% bis 90 Gew.% Fluorethan (R161);
- 10% bis 60 Gew.% Trifluoriodmethan (R13I1); und
- eine geringe Menge von Octafluorpropan (R218).

2. Zusammensetzung nach Anspruch 1, aufweisend 75% bis 85 Gew.% Fluorethan.

3. Zusammensetzung nach Anspruch 2, aufweisend 78% bis 82 Gew.% Fluorethan.

4. Zusammensetzung nach einem der vorgenannten Ansprüche, aufweisend 15% bis 25 Gew.% Trifluoriodmethan.

5. Zusammensetzung nach einem der vorgenannten Ansprüche, aufweisend 18% bis 22 Gew.% Trifluoriodmethan.

6. Zusammensetzung nach einem der vorgenannten Ansprüche, aufweisend bis zu 25 Gew.% Octafluorpropan (R218).

7. Zusammensetzung nach Anspruch 6, aufweisend 2% bis 20 Gew.% Octafluorpropan.

8. Zusammensetzung nach Anspruch 7, aufweisend 5% bis 15 Gew.% Octafluorpropan.

9. Zusammensetzung nach einem der vorgenannten Ansprüche 6 bis 8, bestehend aus einer dreikomponentigen Zusammensetzung aus Fluorethan, Trifluoriodmethan und Octafluorpropan.

10. Verwendung einer Zusammensetzung nach einem der Ansprüche 1 bis 9 als ein Austausch-Kühlmittel zum Austausch von R22 in einem Kühlsystem.

11. Verwendung einer Zusammensetzung nach einem der Ansprüche 6 bis 8 als Austausch-Kühlmittel zum Austausch von R502 in einem Kühlsystem.

## Revendications

1. Composition pouvant se vaporiser pour une utilisation comme remplacement du réfrigérant R22 ou R502, qui comprend les trois composants suivants:
- de 40 à 90% en poids de fluoroéthane (RI61);
- de 10 à 60% en poids de trifluoroiodométhane (RI3II); et
- une quantité mineure d'octafluoropropane (R218).

2. Composition suivant la revendication 1, qui comprend de 75 à 85% en poids de fluoroéthane.

3. Composition suivant la revendication 2, qui comprend de 78 à 82% en poids de fluoroéthane.

4. Composition suivant l'une quelconque des revendications précédentes, qui comprend de 15 à 25% en poids de trifluoroiodométhane.

5. Composition suivant l'une quelconque des revendications précédentes, qui comprend de 18 à 22% en poids de trifluoroiodométhane.

6. Composition suivant l'une quelconque des revendications précédentes, qui comprend jusqu'à 25% en poids d'octafluoropropane (R218).

7. Composition suivant la revendication 6, qui comprend de 2 à 20% en poids d'octafluoropropane.

8. Composition suivant la revendication 7, qui comprend de 5 à 15% en poids d'octafluoropropane.

9. Composition suivant l'une quelconque des revendications 6 à 8, qui est une composition à trois composants constituée de fluoroéthane, de trifluoroiodométhane et d'octafluoropropane.

10. Utilisation d'une composition suivant l'une quelconque des revendications 1 à 9 comme réfrigérant de remplacement pour remplacer R22 dans un système de réfrigération.

11. Utilisation d'une composition suivant l'une quelconque des revendications 6 à 8 comme réfrigérant de remplacement pour remplacer R502 dans un système de réfrigération.
